# EUROPÄISCHE PATENTANMELDUNG

(11) **EP 3 565 126 A1**
(43) Veröffentlichungstag der Anmeldung: **06.11.2019**
(21) Anmeldenummer: 19180874.0
(22) Anmeldetag: 25.08.2004
(51) Int. Cl.: H04B 1/18

(54) **SCHALTUNG MIT VERRINGERTER EINFÜGEDÄMPFUNG UND BAUELEMENT MIT DER SCHALTUNG**

(30) Priorität: 11.11.2003 DE 10352642
(62) Teilanmeldung aus: 04764478.6
(71) Anmelder: SnapTrack, Inc., San Diego, CA 92121-1714 (US)
(72) Erfinder: KOVACS, Günter, 81541 München (DE); MEISTER, Veit, 15345 Kagel (DE); SCHNIRCH, Florian, 82296 Schöngeising (DE); BÜNNER, Martin, 80538 München (DE)
(74) Vertreter: Wegner, Hans

(57) **Zusammenfassung**

Die Erfindung gibt eine elektrische Schaltung an, die zumindest zwei parallele, antennenseitig miteinander verbundene Signalpfade aufweist und bei der zur frequenzselektiven Verbesserung der Einfügedämpfung im Durchlaßbereich eines ersten Signalpfads in einem zweiten Signalpfad eine dem Durchlaßbereich entsprechende Bandsperre vorgesehen ist. Durch die Bandsperre wird das Signal an der Verzweigungsstelle der parallelen Signalpfade aus dem zweiten Signalpfad reflektiert und so in den ersten Signalpfad umgeleitet.

## Beschreibung

Die Erfindung betrifft eine elektrische Schaltung, die insbesondere zum Einsatz in modernen Mobilfunkgeräten mit mehreren Funktionalitäten geeignet ist.

Neben den Mobilfunk-Endgeräten, die ein oder mehrere Mobilfunksysteme zur Übertragung der Daten der mobilen Telekommunikation, z. B. AMPS (Advanced Mobile Phone System), GSM (Global System Mobile) und PCS (Personal Communication System) bedienen, werden z. Z. Endgeräte entwickelt, die darüber hinaus zusätzliche Funktionalitäten wie z. B. Ortsbestimmung (GPS = Global Positioning System) oder eine drahtlose Verbindung zu EDV-Geräten (Bluetooth) oder zu einem lokalen Netz (WLAN = Wireless Local Area Network) erfüllen.

Es ist bekannt, daß zwischen verschiedenen Frequenzbändern in Zeitschlitzen mittels eines Antennenschalters umgeschaltet werden kann (time division), wobei eine gemeinsame Sende/Empfangsantenne nacheinander mit verschiedenen Signalpfaden verbunden wird. Diese Lösung hat den Nachteil, daß der jeweilige Signalpfad nicht zu jeder Zeit verfügbar ist.

Mit einer gemeinsamen Antenne zu übertragende Signale unterschiedlicher Mobilfunksysteme können mittels eines Diplexers, der einen Tiefpaß und einen Hochpaß aufweist, voneinander getrennt werden (frequency division). Das Sende- bzw. Empfangssignal desselben Mobilfunksystems wird z. B. durch einen Duplexer in den entsprechenden Sende- bzw. Empfangszweig umgeleitet.

Bei mehreren in einem Endgerät zur Verfügung gestellten Funktionalitäten wird jeder Funktionalität i. d. R. ein bestimmter Frequenzbereich zur Datenübertragung zugeordnet.

Bekannt sind beispielsweise Endgeräte mit zwei Antennen, wobei eine Antenne zur Übertragung im PCS-Band und die andere zur Übertragung von Bluetooth-, WLAN- oder GPS-Daten benutzt wird. Die Lösung mit getrennten Antennen hat den Vorteil einer besonders hohen Unterdrückung des Gegenbandes und einer niedrigen Einfügedämpfung in beiden Durchlaßbereichen, hat aber einen erhöhten Platzbedarf und/oder höhere Kosten.

Beispielsweise ist es möglich, zwei für jeweils ein Mobilfunksystem ausgelegte Signalpfade und einen zur GPS-Datenübertragung geeigneten Signalpfad mit einer Sende/Empfangsantenne über eine Antennenweiche zu verbinden, die einen Tiefpaß, einen Hochpaß und einen zur GPS-Datenübertragung vorgesehenen Bandpaß aufweist. Dabei sind alle Signalpfade parallel an eine Antenne geschaltet. Die Lösung mit einer Antenne ist platzsparend, hat allerdings den Nachteil einer hohen Einfügedämpfung, da durch die antennenseitige Verzweigung des Signalpfades ein Teil des Nutzsignals verloren geht.

Ferner ist es bekannt, bei einem Multiband-Endgerät mit einer GPS-Funktionalität antennenseitig einen Diplexer zur Trennung von z. B. AMPS- und PCS-Signalen zu schalten, wobei ein GPS-Signalpfad nach dem Diplexer beispielsweise durch ein Bandpaßfilter oder einen nachgeschalteten weiteren Diplexer abgezweigt wird.

Alle bisher bekannte Endgeräte mit einer Antenne und mehreren Funktionalitäten, d. h. bei mehreren parallel zueinander verlaufenden, an eine Antenne angeschlossenen Signalpfaden zeichnen sich durch eine hohe Einfügedämpfung aus.

Aufgabe der vorliegenden Erfindung ist es daher, eine mit nur einer Antenne betreibbare Frontend-Schaltung anzugeben, die einerseits bei mehreren Funktionalitäten zur Signaltrennung dient und andererseits eine geringe Einfügedämpfung im Durchlaßbereich mindestens eines Signalpfades aufweist.

Diese Aufgabe ist mit einer Schaltung gemäß dem Anspruch 1 gelöst. Vorteilhafte Weiterbildungen und Ausführungsformen der Erfindung gehen aus weiteren Ansprüchen hervor.

Die Erfindung gibt eine Schaltung an mit einem ersten Signalpfad (Signalpfad = Zweig), in dem ein Bandpaß für einen Durchlaßbereich realisiert ist, und mit einem zweiten Signalpfad, in dem für den Durchlaßbereich des ersten Signalpfads eine Bandsperre mit einem entsprechenden Sperrbereich vorgesehen ist. Die Schaltung ist direkt oder über eine weitere Schaltung mit einem Antennenanschluß bzw. einer Antenne verbindbar. Der erste und der zweite Signalpfad verlaufen parallel zueinander und sind antennenseitig miteinander verbunden. Der Durchlaßbereich überlappt zumindest teilweise mit dem Sperrbereich, wodurch im Überlappungsbereich des Durchlaß- und Sperrbereichs im ersten Signalpfad eine geringe Einfügedämpfung des Nutzsignals erzielt wird und Störungen aus dem zweiten Signalpfad im Frequenzbereich des Nutzsignals antennenseitig unterdrückt werden.

Unter einem Nutzsignal versteht man im Sinne der Erfindung ein im ersten Signalpfad zu übertragendes und aus dem zweiten Signalpfad zu extrahierendes Signal.

Die Erfindung hat den Vorteil, daß die im Frequenzbereich voneinander zu trennenden Signalpfade zu jeder Zeit zur Datenübertragung verfügbar sind, wobei im ersten Signalpfad durch die Umleitung des Nutzsignals an der Signalpfad-Verzweigungsstelle in diesen Pfad mittels einer Bandsperre im zweiten Signalpfad eine geringe Einfügedämpfung und eine entsprechend hohe Empfindlichkeit erreicht wird.

Eine Bandsperre im parallelen zweiten Signalpfad hat den Vorteil, daß dieser Signalpfad bei allen Frequenzen mit Ausnahme des Sperrbereichs zur Datenübertragung, insbesondere zu einer Multiband-Datenübertragung genutzt werden kann. Dabei wird eine einfachere Verschaltung erzielt und der logistische Aufwand reduziert, da schon bewährte Bauteile und Baugruppen in kürzester Zeit um weitere Funktionalitäten erweitert werden können.

Die Erfindung erlaubt, einen (ersten) Signalpfad, der für eine besondere Funktionalität bzw. für ein dieser Funktionalität zugeordnetes Nutzsignal ausgelegt ist, ohne große Signalverluste direkt an eine Antenne oder an einen Ausgang einer Antennenweiche anzuschließen und diesen Signalpfad parallel zu einem weiteren (zweiten) Signalpfad zu führen, wobei das abgezweigte Nutzsignal ausgangsseitig zu einer weiteren Signalverarbeitung zur Verfügung gestellt wird.

Mit einer erfindungsgemäßen Schaltung gelingt es, bei einem geringen Aufwand ein Bauelement mit geringem Platzbedarf zu realisieren.

Die mit einer Antenne verschaltbare erfindungsgemäße Schaltung stellt eine Antennenweiche dar, die eine Kombination eines Bandpasses und einer im Durchlaßbereich des Bandpasses sperrenden Bandsperre umfaßt, und wird von der Anmelderin im Folgenden auch als "Extractor-Filter" bezeichnet.

Die Impedanz der Bandsperre und des Bandpasses ist im erfindungsgemäßen Extractor-Filter vorteilhaft so eingestellt, daß im Durchlaßbereich des ersten Signalpfades 1) die antennenseitige Impedanz des Bandpasses an die Antennenimpedanz angepaßt und 2) die antennenseitige Impedanz der Bandsperre hoch ist. Dagegen ist bei allen Frequenzen mit Ausnahme des Sperrbereichs 1) die Impedanz der Bandsperre antennenseitig stets an die Antennenimpedanz angepaßt und 2) die antennenseitige Impedanz des Bandpasses hoch.

Insbesondere ein in einem einzigen, z. B. modular aufgebauten Bauelement integriertes Extractor-Filter dient zur Verbesserung der antennenseitigen Impedanzanpassung einer Frontend-Schaltung gegenüber den schon bekannten Frontend-Schaltungen.

Mit einer gezielten Unterdrückung eines Frequenzbandes, das dem im ersten Signalpfad übertragbaren Nutzsignal entspricht, gelingt es, eine hohe Unterdrückung von mit dem Nutzsignal zusammenhängenden Störsignalen, z. B. eine hohe Unterdrückung des Rauschens eines zur Verstärkung des Nutzsignals verwendeten Leistungsverstärkers, zu erreichen. Dieser Effekt ist mit der Unterdrückung des Gegenbandes im jeweiligen Band eines Duplexers zu vergleichen, nur wird dies erfindungsgemäß sicher und ohne großen Aufwand mit der Bandsperre erreicht.

In einer vorteilhaften Variante der Erfindung wird das der besonderen Funktionalität zugeordnete Signal direkt an der Antenne über ein Bandpaßfilter abgegriffen, wobei der erste und der zweite Zweig an den Antennenanschluß angeschlossen ist und wobei das Bandpaßfilter im ersten Zweig angeordnet ist. Als Bandsperrelement wird vorzugsweise ein diskreter Resonator, ein elektroakustischer Resonator, ein aus mehreren diskreten Elementen und/oder Streifenleitungen aufgebauter Parallelschwingkreis oder ein diskretes Bandsperrfilter genutzt. Unter den diskreten Elementen versteht man z. B. L,C-Elemente.

Ein beispielhafter Aufbau eines Bandsperrfilters in Ladder-Type-Bauweise ist z. B. aus der Druckschrift S. Beaudin, C.-Y. Jian, D. Sychaleun, "A New SAW Band Reject Filter and its Applications in Wireless Systems", 2002 IEEE Ultrasonics Symposium Munich, SS. 143-147 bekannt. Auf diese Druckschrift wird hier vollinhaltlich Bezug genommen.

Diese Erfindung ist nicht auf einen einzigen ersten oder zweiten Signalpfad beschränkt. Auch mehrere Durchlaßbereiche können im ersten Signalpfad vorgesehen sein, wobei für mindestens einen Durchlaßbereich ein zweiter Signalpfad mit einer entsprechenden Bandsperre vorgesehen ist. Möglich ist aber auch, für jeden Durchlaßbereich einen eigenen zweiten Signalpfad mit einer mit diesem Durchlaßbereich zumindest teilweise überlappenden Bandsperre zu bilden.

Eine erfindungsgemäße Schaltung kann beispielsweise mehrere erste Signalpfade aufweisen, wobei in mindestens einem ersten Signalpfad ein Bandpaß für n ≥ 1 Durchlaßbereiche realisiert und ein zweiter Signalpfad mit entsprechend vielen Bandsperren vorgesehen ist. Der Durchlaßbereich überlappt zumindest teilweise mit dem ihm zugeordneten Sperrbereich.

Im folgenden wird die Erfindung anhand von Ausführungsbeispielen und der dazugehörigen Figuren näher erläutert. Die Figuren zeigen anhand schematischer und nicht maßstabsgetreuer Darstellungen verschiedene Ausführungsbeispiele der Erfindung. Gleiche oder gleich wirkende Teile sind mit gleichen Bezugszeichen bezeichnet.

Es zeigen
Figur 1 das Blockschaltbild einer erfindungsgemäßen Schaltung mit in getrennten Bauelementen realisierten Bandpaß und Bandsperre
Figur 2 das Blockschaltbild einer erfindungsgemäßen Schaltung mit in einem Chip realisierten Bandpaß und Bandsperre
Figur 3 das Blockschaltbild einer erfindungsgemäßen, in einem modular aufgebauten Bauelement realisierten Schaltung mit als jeweils ein Chip ausgeführten Bandpaß und Bandsperre
Figur 4 verschiedene Varianten einer in einer erfindungsgemäßen Schaltung einzusetzenden Bandsperre
Figur 5a das Blockschaltbild einer erfindungsgemäßen Schaltung mit einer als Resonator ausgeführten Bandsperre
Figur 5b das Blockschaltbild einer erfindungsgemäßen Schaltung gemäß Figur 5a, bei der der Bandpaß im ersten Zweig als Balun ausgeführt ist
Figur 6a bis 6d Blockschaltbilder erfindungsgemäßer Schaltungen mit einem im zweiten Zweig der Bandsperre nachgeschalteten Diplexer
Figur 7a bis 7c Blockschaltbilder erfindungsgemäßer Schaltungen mit einem dem Bandpaß und der Bandsperre vorgeschalteten Diplexer
Figur 8 das Blockschaltbild einer erfindungsgemäßen Schaltung mit einem im zweiten Zweig der Bandsperre nachgeschalteten Duplexer
Figur 9 das Blockschaltbild einer erfindungsgemäßen Schaltung mit einem im zweiten Zweig der Bandsperre nachgeschalteten weiteren Bandpaß
Figur 10 das Blockschaltbild einer kaskadierten erfindungsgemäßen Schaltung
Figur 11 das Blockschaltbild einer erfindungsgemäßen Schaltung mit einem dem Bandpaß und der Bandsperre vorgeschalteten Diplexer und einem im zweiten Zweig der Bandsperre nachgeschalteten Duplexer
Figur 12a, 12b und 12c jeweils das Blockschaltbild einer erfindungsgemäßen Schaltung, bei der im ersten Zweig ein Balun vorgesehen ist

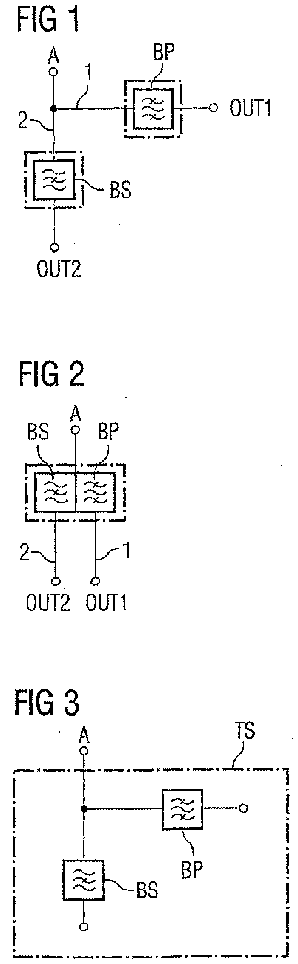

Figur 1 zeigt das Blockschaltbild einer erfindungsgemäßen Schaltung mit einem z.B. als Antennenanschluß A vorgesehenen externen Anschluß, einem ersten Signalpfad 1 und einem zweiten Signalpfad 2. Der erste Signalpfad 1 weist einen beispielsweise externen Anschluß OUT1 auf. Der zweite Signalpfad 2 weist einen externen Anschluß OUT2 auf.

Im ersten Signalpfad 1 ist ein vorzugsweise als Bandpaßfilter ausgebildeter Bandpaß BP angeordnet. Das Bandpaßfilter kann beispielsweise in Ladder-Type- oder DMS-Bauweise ausgeführt sein.

Zur Verringerung der Einfügedämpfung des in den ersten Signalpfad 1 abzweigenden Nutzsignals, insbesondere eines GPS-, Bluetooth- und/oder WLAN-Signals, ist im zweiten Signalpfad 2 eine vorzugsweise als Resonator ausgebildete Bandsperre vorgesehen, wobei das Sperrband des zweiten Signalpfads und der Durchlaßbereich des ersten Signalpfads zumindest teilweise überlappen.

Der Bandpaß BP und die Bandsperre BS sind in diesem Ausführungsbeispiel in jeweils einem Bauelement (Chip) realisiert und z. B. auf einer Leiterplatte montiert. Jeder Chip ist vorzugsweise ein gehäustes Bauelement. Die Bandsperre kann aber auch aus Einzelelementen auf der Leiterplatte aufgebaut und elektrisch mit einem - gehäusten oder ungehäusten - als kompaktes Bauteil vorhandenen, ebenfalls auf der Leiterplatte montierten Bandpaßfilter verbunden sein.

Die Ausführung der Schaltungskomponenten der erfindungsgemäßen Schaltung in einem Bauelement bzw. auf einem Chip mit Außenkontakten zur externen Verschaltung ist in den Figuren mit gestrichelten Linien angedeutet. Die im Blockschaltbild direkt aneinander grenzenden Schaltungskomponenten sind vorzugsweise in einem Chip angeordnet.

Eine weitere vorteilhafte Variante der Erfindung ist in der Figur 2 vorgestellt. Der Bandpaß BP und die Bandsperre BS sind in einem gemeinsamen Chip integriert, wobei die Elemente des Bandpasses und der Bandsperre vorzugsweise als Leiterbahnen in Metallisierungsebenen eines z. B. keramischen Vielschichtsubstrats ausgebildet sind.

In Figur 3 ist eine als Modulaufbau realisierte erfindungsgemäße Schaltung gezeigt. Es ist angedeutet, daß als separate Chips ausgeführte Bandpaß BP und Bandsperre BS auf einem Trägersubstrat TS montiert sind. Das Trägersubstrat kann eine oder mehrere dielektrische Lagen z. B. aus einer LTCC-Keramik (LTCC = Low Temperature Cofired Ceramics) aufweisen. Zwischen zwei dielektrischen Lagen ist eine Metallisierungsebene angeordnet, in der mittels strukturierter Leiterbahnen weitere Schaltungen, z. B. ein Anpaßnetzwerk, realisiert sein können. Verschiedene Metallisierungsebenen sind elektrisch mittels der Durchkontaktierungen miteinander, mit den Chips und mit hier nicht dargestellten Außenkontakten des Moduls bzw. des Trägersubstrats verbunden.

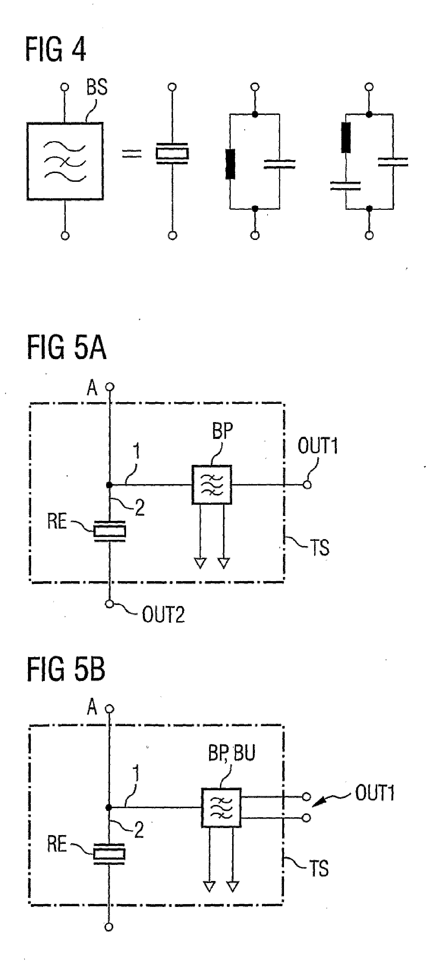

In Figur 4 sind verschiedene Ausführungsformen einer Bandsperre BS gezeigt. Die Bandsperre BS kann als ein Parallelschwingkreis oder generell als ein hier im Ersatzschaltbild schematisch dargestellter Resonator, z. B. ein mit akustischen Volumenwellen arbeitender Dünnschicht-Resonator, oder als elektroakustischer Wandler ausgebildet werden. Die Bandsperre wird durch eine Polstelle (Antiresonanz) des Resonators bei der erwünschten Resonanzfrequenz erzeugt. In diesem Fall ist das entsprechende Sperrband im zweiten Signalpfad schmaler als der Durchlaßbereich des diesem zweiten Signalpfad zugeordneten ersten Signalpfades.

Es ist auch möglich, die Bandsperre als ein an sich bekanntes Bandsperrfilter zu realisieren, dessen Sperrbandbreite gleich groß oder größer als die Bandbreite des entsprechenden Bandpasses ist.

In Figuren 5a und 5b ist jeweils ein modular aufgebautes Bauelement mit einer erfindungsgemäßen Schaltung gezeigt, bei der die Bandsperre als ein Resonator RE realisiert ist. Der erste Signalpfad 1 ist in Figur 5a zur Führung eines unsymmetrischen und in Figur 5b zur Führung eines symmetrischen Hochfrequenzsignals geeignet. In Figur 5b ist der Bandpaß BP als ein Balun BU ausgeführt. Möglich ist es auch, einem als Chip ausgebildeten Bandpaßfilter einen separat ausgeführten oder im Trägersubstrat TS integrierten Balun nachzuschalten.

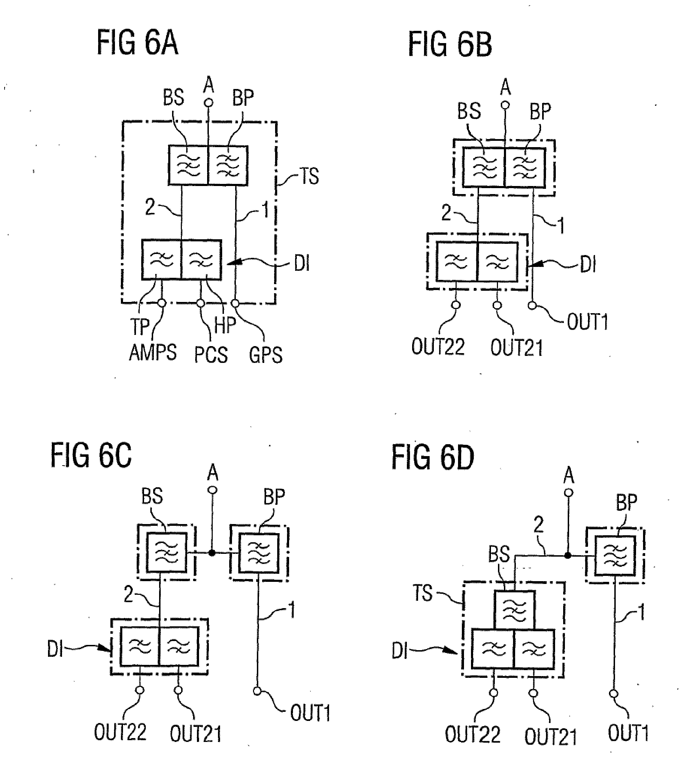

In Figur 6a ist das Blockschaltbild einer erfindungsgemäßen Schaltung mit einem im zweiten Signalpfad 2 der Bandsperre BS nachgeschalteten Diplexer DI gezeigt. Der Diplexer DI umfaßt einen Tiefpaßfilter TP und einen Hochpaßfilter HP. Der Diplexer dient zum Trennen der Signale zweier Mobilfunksysteme, hier AMPS und PCS. Das Sende- und Empfangssignal eines Mobilfunksystems, z. B. AMPS, kann beispielsweise mit einem hier nicht gezeigten Duplexer in den entsprechenden Sende- bzw. Empfangspfad umgeleitet werden. Der erste Signalpfad 1 wird in diesem Ausführungsbeispiel zur Übertragung von GPS-Daten benutzt. Diese Schaltung ist komplett in einem vorzugsweise modular aufgebauten Bauelement realisiert. Dabei ist der Bandpaß BP und die Bandsperre BS vorzugsweise in oder auf einem gemeinsamen Chip ausgeführt. Das Hoch- und Tiefpaßfilter HP bzw. TP des Diplexers DI sind auch in oder auf einem gemeinsamen Chip ausgeführt. Beide Chips sind auf einem Trägersubstrat TS montiert.

In Figur 6b ist angedeutet, daß der den Bandpaß BP und die Bandsperre BS umfassende Chip und der den Diplexer DI umfassende Chip jeweils als getrennte Bauelemente vorhanden sind, die unabhängig voneinander auf einer Leiterplatte montiert und so elektrisch miteinander verbunden werden können. Der Diplexer DI kann auch komplett in einem Vielschichtsubstrat bzw. im Substratinneren realisiert sein.

In Figur 6c ist die Bandsperre BS und der Bandpaß BP in jeweils einem Chip realisiert und unabhängig voneinander auf einer Leiterplatte montiert und durch auf der Leiterplatte vorgesehene Leiterbahnen elektrisch miteinander und mit einer Antenne verbunden. Die Bandsperre BS und der Bandpaß BP können in unterschiedlichen Technologien ausgeführt sein, wobei der Bandpaß z. B. als ein mit akustischen Oberflächenwellen und die Bandsperre z. B. als ein mit akustischen Volumenwellen arbeitendes Bauelement ausgebildet sind.

In Figur 6d ist der Bandpaß BP als ein Chip ausgeführt. Die Bandsperre BS ist zusammen mit einem Diplexer DI auf einem gemeinsamen Trägersubstrat TS angeordnet, wobei der Diplexer DI auch im Substratinneren integriert sein kann.

Der Diplexer DI trennt voneinander insbesondere die bei einer ersten Frequenz f₁ (z. B. ₁ GHz, AMPS) und bei einer zweiten Frequenz f₂ (z. B. 2 GHz, PCS) zu übertragenden Signale. Eine vorteilhafte Ausführungsform der Erfindung schlägt vor, ein zusätzliches, bei einer dritten Frequenz f₃ (z. B. 1,5 GHz, GPS) übertragbares Nutzsignal nicht wie z. B. in Figur 6d direkt von einem Antennenpfad, sondern von einem Pfad eines im Antennenpfad geschalteten Diplexers abzuzweigen.

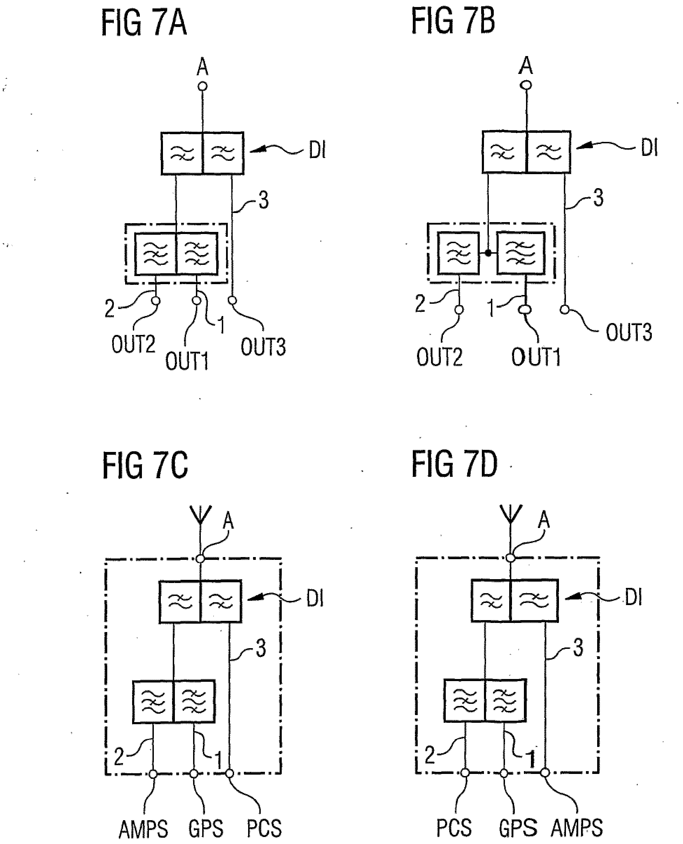

Figuren 7a bis 7d zeigen jeweils ein Blockschaltbild einer derartigen erfindungsgemäßen Schaltung mit einem dem Extractor-Filter vorgeschalteten Diplexer DI.

In Figuren 7a, 7b und 7d wird das der niedrigeren Frequenz f₁ zugeordnete Signal in den Signalpfad 3 umgeleitet und am externen Anschluß OUT3 für eine weitere Signalverarbeitung zur Verfügung gestellt. Der Signalpfad 2 dient hier zur Übertragung des der höheren Frequenz f₂ zugeordneten Signals. Der Signalpfad 1 dient zur Übertragung des Signals bei der dritten Frequenz f₃, die höher als f₁ liegt. In diesem Ausführungsbesipiel schaltet der Diplexer DI bei einer Frequenz f um, die bei f₃ < f₂ zwischen f₁ und f₃ und bei f₂ < f₃ zwischen f₁ und f₂ liegt. Diese Schaltung ist generell bei folgenden Bedingungen realisierbar:
1) f₁ < f₂, f₃,
2) f₁ < f < f₂, f₃.

Die in der Figur 7b vorgestellte Variante der Erfindung ist geeignet, wenn f₁, f₃ < f₂ und f₁, f₃ < f < f₂ der Fall ist.

In der in Figur 7b vorgestellten Variante schaltet der Diplexer DI bei einer Frequenz f um, die zwischen f₃ und f₂ liegt, falls f₁ < f₃ gilt. Bei f₃ < f₁ schaltet der Diplexer zwischen f₁ und f₂ um. Das höherfrequente, bei f₂ (PCS) übertragbare Signal wird durch den Hochpaß in den Signalpfad 3 umgeleitet. Die niederfrequenteren, bei f₁ (AMPS) und f₃ (GPS) übertragbaren Signale verlaufen zunächst in einem Pfad und werden durch das Extractor-Filter voneinander getrennt.

In Figur 7a ist angedeutet, daß die Bandsperre und der Bandpaß, also das komplette Extractor-Filter in einem vorzugsweise gehäusten Bauelement realisiert sind. In Figur 7b besteht das Extractor-Filter aus zwei voneinander unabhängig ausgeführten, vorzugsweise jeweils gehäusten Bauelementen. Die Figuren 7c und 7d zeigen jeweils eine Frontend-Schaltung gemäß Erfindung, die als ein modular aufgebautes Bauelement vorhanden ist.

Ein modular aufgebautes Bauelement mit einer erfindungsgemäßen Schaltung kann auch weitere Frontend-Schaltungen, z. B. Anpaßnetzwerke oder Antennenschalter mit aktiven Komponenten umfassen. Möglich ist auch die Integration der rauscharmen Verstärker, Leistungsverstärker, Mischer, Oszillatoren usw. in einem einzigen Modul.

Ein Anpaßnetzwerk kann z. B. eine einzelne Induktivität oder Kapazität, ein Leitungsabschnitt oder eine Kombination einer beliebigen Anzahl dieser Elemente umfassen. Ein Anpaßnetzwerk kann antennenseitig vorgesehen, d. h. dem Extractor-Filter vorgeschaltet sein. Ein Anpaßnetzwerk kann aber auch dem Extractor-Filter nachgeschaltet sein.

Es ist möglich, eine Bandsperre dadurch zu bilden, daß die eigentliche Bandsperre weggelassen und durch eine direkt an die Antenne angeschlossene - sonst "der Bandsperre" nachgeschaltete - Baugruppe ersetzt wird, wobei diese Baugruppe zusammen mit einem antennenseitig angeordneten Anpaßnetzwerk bzw. einem Anpaßelement zur Impedanzanpassung des Bandpaßfilters ein virtuelles Bandsperrelement realisiert. In diesem Fall kann das - in seiner Übertragungscharakteristik eine Pol-Stelle aufweisende - Bandsperrelement als solches weggelassen werden. Die Baugruppe kann z. B. ein Diplexer, Duplexer oder Schaltmodul mit mindestens einem Antennenschalter sein.

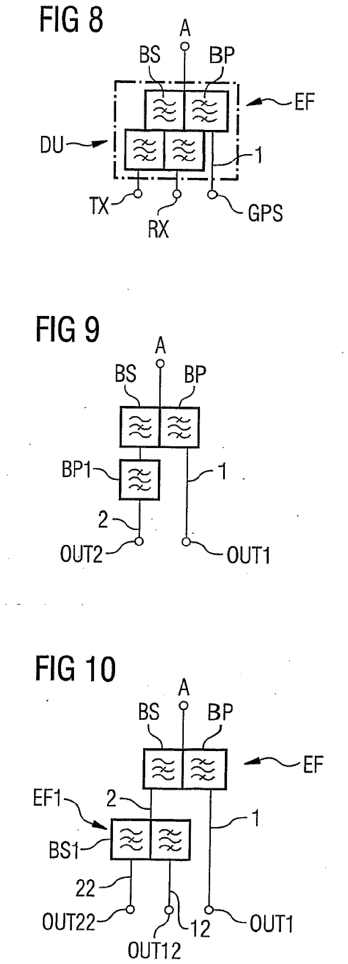

In Figur 8 ist eine weitere erfindungsgemäße Schaltung gezeigt, bei der das Extractor-Filter EF direkt an eine Antenne anschließbar ist. Im zweiten Signalpfad ist nach der Bandsperre BS ein Duplexer geschaltet, der das Sende- und das Empfangssignal eines Mobilfunksystems voneinander trennt und diese entsprechend in ein Sendepfad TX und ein Empfangspfad RX umleitet. Durch eine gezielte Bandsperre im zweiten Signalpfad werden die im Frequenzbereich des GPS-Signals liegenden, im zweiten Signalpfad generierten Störsignale antennenseitig besonders effizient unterdrückt.

In dem in Figur 9 gezeigten Ausführungsbeispiel ist im zweiten Signalpfad 2 nach der Bandsperre BS ein weiterer Bandpaß BP1 geschaltet, dessen Durchlaßbereich mit dem Sperrbereich der Bandsperre BS nicht überlappt. Der Bandpaß BP und der weitere Bandpaß BP1 können zusammen einen Duplexer realisieren, wobei im Signalpfad 2 dieses Duplexers ein Frequenzband oder zumindest eine Frequenz gezielt extrahiert ist. Diese Frequenz kann z. B. eine zu unterdrückende Frequenz eines anderen Mobilfunksystems oder eine Harmonische eines nachgeschalteten Oszillators sein.

Die in Figur 9 vorgestellte Schaltung kann in einem einzigen Bauelement oder aus mehreren unabhängigen Chips aufgebaut sein.

In Figur 10 ist angedeutet, daß ein z. B. an eine Antenne angeschlossenes Extractor-Filter EF mit mindestens einem weiteren Extractor-Filter EF1 kaskadiert werden kann.

Das weitere Extractor-Filter EF1 ist im zweiten Signalpfad 2 des ersten Extractor-Filters EF geschaltet. Der Signalpfad 1 dient zur Übertragung eines ersten Nutzsignals, z. B. des GPS-Signals. Der mit dem Anschluß OUT12 versehene erste Signalpfad 12 des weiteren Extractor-Filters EF1 dient zur Übertragung eines zweiten Nutzsignals, z. B. zur Übertragung der WLAN-Daten. Die mit dem jeweiligen Nutzsignal verbundenen Störsignale werden jedesmal durch die entsprechende Stufe der Extractor-Filter-Kaskade unterdrückt, so daß im zweiten Signalpfad 22 des weiteren Extractor-Filters EF1 zwei unterschiedliche Sperrbänder resultieren, wobei in diesem Pfad zumindest die Frequenz des ersten und des zweiten Nutzsignals unterdrückt wird.

Auch eine mehrstufige Kaskade aus N hintereinander geschalteten Extractor-Filtern ist erfindungsgemäß vorgesehen, wobei die in dem zweiten Signalpfad antennenseitig ankommenden Signale nach der N-ten Stufe in N voneinander unterschiedlichen Frequenzbändern unterdrückt werden.

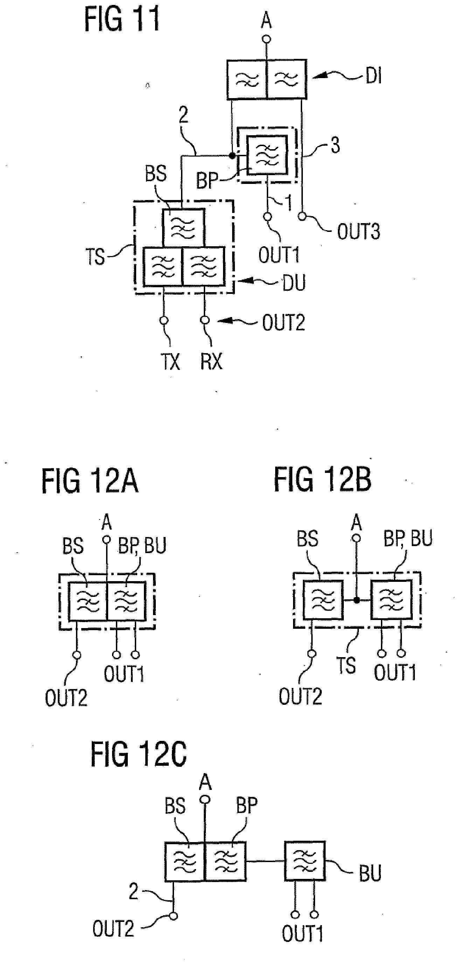

In Figur 11 ist ein Ausführungsbeispiel der Erfindung vorgestellt, in dem das Extractor-Filter einem Diplexer DI nachgeschaltet und einem im zweiten Signalpfad 2 des Extractor-Filters angeordneten Duplexer DU vorgeschaltet ist. Die Bandsperre BS und der Duplexer DU sind hier zusammen auf einem Trägersubstrat integriert. Der Bandpaß BP ist in diesem Fall als ein unabhängiges z. B. diskretes Bauelement verfügbar.

Die Extraktion des in den ersten Signalpfad 1 umzuleitenden Signals erfolgt in dieser Variante nicht direkt an der Antenne, sondern zwischen dem Diplexer DI und dem Duplexer DU.

Ein Extractor-Filter kann grundsätzlich einer beliebigen Antennenweiche oder einem Antennenschalter nachgeschaltet sein. Umgekehrt gilt auch, daß beliebige Frequenzweichen oder Schalter einem Extractor-Filter nachgeschaltet sein können, wobei diese vorzugsweise im zweiten Signalpfad des Extractor-Filter anzuordnen sind.

In Figuren 12a, 12b und 12c ist angedeutet, daß in einer ein Extractor-Filter umfassenden Schaltung bzw. in einem Bauelement, in dem eine solche Schaltung realisiert ist, auch ein symmetrisches Nutzsignal geführt werden kann. Der Anschluß OUT1 des ersten Signalpfades 1 ist als ein symmetrisches Tor ausgeführt. Der Bandpaß BP kann wie in Figuren 12a und 12b angedeutet gleichzeitig die Funktion eines Baluns BU umfassen.

In Figur 12a ist das einen unsymmetrischen und einen symmetrischen Port aufweisende Bandpaßfilter und das zwei unsymmetrische Ports aufweisende Bandsperrfilter gemeinsam auf einem Chip realisiert.

In Figur 12b ist das einen unsymmetrischen und einen symmetrischen Port aufweisende Bandpaßfilter und das zwei unsymmetrische Ports aufweisende Bandsperrfilter in jeweils einem eigenen Chip realisiert, wobei beide Chips auf einem gemeinsamen Trägersubstrat TS oder auf einer Leiterplatte des Endgeräts montiert sind.

In Figur 12c ist das als ein Chip ausgeführtes Extractor-Filter und ein als ein weiterer Chip ausgeführter Balun auf einem gemeinsamen Trägersubstrat oder auf einer Leiterplatte des Endgeräts montiert.

Ein Extractor-Filter kann aus mit akustischen Oberflächen- oder Volumenwellen arbeitenden Resonatoren, MEMS-Elementen (MEMS = Micro Electro-Mechanical System), MWK-Filtern (MWK = Mikrowellenkeramik) oder anderen, hier nicht genannten elektroakustischen Strukturen aufgebaut sein. Es ist möglich, das komplette Extractor-Filter in nur einer Technologie auszuführen. Möglich ist aber auch, daß in verschiedenen Technologien hergestellte und z. B. jeweils als diskrete Bauelemente verfügbare Komponenten beliebig miteinander kombiniert werden.

Jeder Chip, in bzw. auf dem ein komplettes Extractor-Filter realisiert ist, kann zumindest einen SAW-Resonator und/oder zumindest einen BAW-Resonator und/oder L,C-Elemente umfassen (SAW = Surface Acoustic Wave, BAW = Bulk Acoustic Wave). Es ist vorgesehen, daß die antennenseitig angeordneten Komponenten des Extractor-Filters z. B. BAW-Resonatoren und die ausgangsseitig angeordneten, insbesondere einen Balun realisierenden Komponenten des Extractor-Filters z. B. SAW-Resonatoren umfassen.

Ferner kann eine erfindungsgemäße Schaltung und insbesondere ein Extractor-Filter aus Einzelelementen, z. B. Induktivitäten, Kapazitäten, Streifenleitungen, Hohlraumresonatoren bzw. deren beliebigen Kombination realisiert sein. Diese können wiederum mit o. g. elektroakustischen und -mechanischen Komponenten beliebig kombiniert werden.

Bei einer erfindungsgemäßen Schaltung ist es grundsätzlich möglich, nur einen Teil der Schaltung in bzw. auf einem oder mehreren Chips zu realisieren und die restliche - insbesondere passive - Schaltungskomponenten in einem gemeinsamen Substrat zu integrieren oder diese separat auf einer Leiterplatte zu montieren.

Die Bandsperre eines Extractor-Filters kann grundsätzlich unabhängig vom Bandpaß in einer dem Extractor-Filter vor- oder nachzuschaltenden Stufe bzw. in einem vor- oder nachzuschaltenden Bauelement (z. B. Duplexer, Diplexer, Filter) integriert sein. Der Bandpaß eines Extractor-Filters kann auch unabhängig von der Bandsperre in einer diesem Bandpaß vor- oder nachzuschaltenden Stufe bzw. in einem vor- oder nachzuschaltenden Bauelement integriert sein.

Unter einer Integration wird hier die Integration in oder auf einem Trägersubstrat oder die Anordnung verschiedener Elemente in einem gemeinsamen, mit einer Leiterplatte verschaltbaren Gehäuse verstanden.

Das im ersten Signalpfad angeordnete Bandpaßfilter ist so ausgelegt, daß es bei der Sendefrequenz des ersten Nutzsignals auch die entsprechende Sendeleistung aushalten kann. Das Bandpaßfilter weist i. d. R. einen ersten, mit der Sendeleistung beaufschlagten Teil und einen zweiten Teil ohne Leistungsbeaufschlagung. In einer Variante der Erfindung wird die Bandsperre und der erste Teil des Bandpaßfilters zusammen auf einem Chip integriert. Der zweite Teil des Bandpaßfilters kann auf demselben oder auf separatem Chip ausgeführt sein.

Die Bandsperre kann als ein diskretes Bauelement verfügbar oder auf einer Leiterplatte aus verschiedenen Einzelelementen ausgeführt sein.

Als Bandsperrelemente können Schwingkreise mit mehreren Polstellen bzw. Bandsperrfilter mit mehr als nur einem Sperrbereich eingesetzt werden.

Die Erfindung ist nicht nur in Mobilfunkgeräten, sondern generell insbesondere in Frontendschaltungen beliebiger Datenübertragungssysteme einsetzbar. Die erfindungsgemäße Schaltung kann z. B. als ein weiter verschaltbares modular aufgebautes Bauelement mit externen Anschlüssen (u. a. Antennenanschluß) verfügbar sein, wobei ein Anschluß für ein erstes Nutzsignal (GPS, WLAN, Bluetooth) und weitere Anschlüsse für weitere Signale ausgelegt sind. Die weiteren Signale können z. B. die im Mobilfunksystems sein, wobei das erste Nutzsignal aus den Mobilfunk-Signalpfaden extrahiert ist.

Im Folgenden werden weitere Beispiele der vorliegenden Erfindung beschrieben:
1. Schaltung
   - mit einem ersten Signalpfad (1), in dem ein Bandpaß (BP) für mindestens einen Durchlaßbereich realisiert ist,
   - mit einem zweiten Signalpfad (2), in dem eine Bandsperre (BS) mit einem entsprechenden Sperrbereich vorgesehen ist,
   - wobei die Schaltung direkt oder über eine weitere Schaltung mit einem Antennenanschluß (A) verbindbar ist,
   - wobei erster und zweiter Signalpfad parallel zueinander verlaufen und antennenseitig miteinander verbunden sind,
   - wobei der Durchlaßbereich zumindest teilweise mit dem Sperrbereich überlappt.
2. Schaltung nach Beispiel 1,
   bei der im ersten Signalpfad als Bandpaß zumindest ein Bandpaßfilter vorgesehen ist.
3. Schaltung nach Beispiel 1 oder 2,
   bei der im zweiten Signalpfad als Bandsperre zumindest ein Bandsperrelement vorgesehen ist.
4. Schaltung nach Beispiel 3,
   bei der das Bandsperrelement ein als diskretes Bauelement verfügbares Bandsperrfilter oder ein als diskretes Bauelement verfügbarer Sperrkreis oder Resonator ist.
5. Schaltung nach Beispiel 3,
   bei der das Bandsperrelement eine Bandsperr-Filterschaltung oder ein Sperrkreis ist und aus mehreren diskreten Elementen aufgebaut ist.
6. Schaltung nach Beispiel 3 oder 4,
   bei der das Bandpaßfilter und das ihm zugeordnete Bandsperrelement in einem gemeinsamen Chip realisiert sind, oder
   bei der das Bandpaßfilter und das ihm zugeordnete Bandsperrelement in jeweils einem Chip realisiert und auf einem gemeinsamen Trägersubstrat (TS) angeordnet sind.
7. Schaltung nach einem der Beispiele 1 bis 4,
   bei der der erste und der zweite Signalpfade in einem einzigen Bauelement realisiert sind.
8. Schaltung nach einem der Beispiele 3 bis 7,
   bei der im zweiten Signalpfad (2) dem Bandsperrelement ein weiteres Bandpaßfilter, ein Diplexer, ein Duplexer oder eine weitere Schaltung nach einem der Beispiele 1 bis 7 nachgeschaltet ist.
9. Schaltung nach einem der Beispiele 1 bis 7,
   bei der antennenseitig ein Diplexer vorgesehen ist,
   bei der der erste Signalpfad (1) und der zweite Signalpfad (2) dem Diplexer nachgeschaltet sind.
10. Schaltung nach Beispiel 9,
   bei der der Diplexer, der erste Signalpfad (1) und der zweite Signalpfad (2) in einem einzigen Bauelement realisiert sind.
11. Schaltung nach Beispiel 9,
   bei der im zweiten Signalpfad (2) dem Bandsperrelement ein Duplexer (DU) nachgeschaltet ist,
   wobei die Bandsperre (BS) und der Duplexer (DU) in einem Bauelement realisiert sind.
12. Schaltung nach Beispiel 11,
   bei der das Bandpaßfilter, das Bandsperrelement und der Duplexer in einem Bauelement realisiert sind.
13. Schaltung nach einem der Beispiele 1 bis 12,
   bei der der erste Signalpfad (1) ausgangsseitig für eine symmetrische Signalführung ausgelegt ist.
14. Schaltung nach Beispiel 13,
   bei der das Bandpaßfilter als ein Balun realisiert ist.
15. Schaltung nach einem der Beispiele 1 bis 14,
   bei der der Durchlaßbereich mit dem ihm zugeordneten Sperrbereich im wesentlichen übereinstimmt.
16. Schaltung nach einem der Beispiele 1 bis 14,
   bei der der Durchlaßbereich breiter als der ihm zugeordnete Sperrbereich ist.
17. Schaltung nach einem der Beispiele 1 bis 14,
   bei der der Durchlaßbereich schmaler als der ihm zugeordnete Sperrbereich ist.
18. Bauelement mit einer Schaltung nach einem der Beispiele 1 bis 17,
   mit einem Antenneneingang,
   mit zumindest einem dem zweiten Signalpfad zugeordneten Ausgang,
   mit zu zumindest einem dem ersten Signalpfad zugeordneten Ausgang.
19. Bauelement nach Beispiel 18,
   bei dem das Bandpaßfilter und das Bandsperrelement in unterschiedlichen Technologien ausgeführt sind.
20. Bauelement nach Beispiel 18 oder 19,
   bei dem das Bandpaßfilter und/oder das Bandsperrelement zumindest einen mit akustischen Wellen arbeitenden Resonator oder Wandler aufweist.
21. Bauelement nach Beispiel 20,
   das in SAW und/oder BAW Technik ausgeführt ist.

### Bezugszeichenliste

- 1, 12: erster Signalpfad
- 2, 21, 22: zweiter Signalpfad
- 3: weiterer Signalpfad
- A: Antennenanschluß
- BP, BP1: Bandpaß
- BS, BS1: Bandsperre
- BU: Balun
- EF: Extractor-Filter
- EF1: weiteres Extractor-Filter
- OUT1, OUT12: externer Anschluß des ersten Signalpfads
- OUT2, OUT21, OUT22: externer Anschluß des zweiten Signalpfads
- OUT3: externer Anschluß des Signalpfades 3
- TS: Trägersubstrat
- RE: Resonator
- DI: Diplexer
- DU: Duplexer
- TX: Sendepfad
- RX: Empfangspfad
- TP: Tiefpaß
- HP: Hochpaß

## Patentansprüche

1. Schaltung umfassend:
einen ersten Signalpfad (1) umfassend einen Bandpaßfilter (BP) für mindestens einen Durchlaßbereich, wobei der Bandpaßfilter mindestens eine erste elektroakustische Struktur umfasst; und
einen zweiten Signalpfad (2) umfassend einen Bandsperrfilter (BS) mit einem entsprechenden Sperrbereich, wobei der Bandsperrfilter mindestens eine zweite elektroakustische Struktur umfasst;
wobei der erste und zweite Signalpfad parallel zueinander sind und an einem Punkt zwischen einer Antennenverbindung und dem Bandpaßfilter und dem Bandsperrfilter miteinander verbunden sind,
wobei der Durchlaßbereich zumindest teilweise mit dem Sperrbereich überlappt, und
wobei mindestens ein Bereich des Bandpaßfilters und des Bandsperrfilters in oder auf einem gemeinsamen Chip ausgeführt sind und wobei andere Bereiche der Schaltung in einem gemeinsamen Substrat integriert oder auf einer Leiterplatte separat montiert sind.

2. Schaltung nach Anspruch 1,
wobei der erste Signalpfad dazu eingerichtet ist ein WLAN- oder GPS-Signal zu empfangen.

3. Schaltung nach Anspruch 1 oder 2,
wobei die mindestens erste und zweite elektroakustische Struktur auf dem gemeinsamen Chip sind.

4. Schaltung nach einem der vorhergehenden Ansprüche,
wobei eine oder mehrere passive Komponenten, die Teil der Schaltung sind, separat vom Chip auf dem gemeinsamen Trägersubstrat integriert oder auf der Leiterplatte montiert sind.

5. Schaltung nach Anspruch 1 oder 2,
bei der der erste und der zweite Signalpfade in einem gemeinsamen Gehäuse realisiert sind.

6. Schaltung nach einem der vorhergehenden Ansprüche,
bei der im zweiten Signalpfad (2) dem Bandsperrfilter ein weiteres Bandpaßfilter, ein Diplexer, ein Duplexer oder eine weitere Schaltung nach einem der Ansprüche 1 bis 5 nachgeschaltet ist.

7. Schaltung nach einem der vorhergehenden Ansprüche,
bei der ein Diplexer zwischen einer Antenne und dem Bandpaßfilter und dem Bandsperrfilter vorgesehen ist,
bei der der erste Signalpfad (1) und der zweite Signalpfad (2) dem Diplexer nachgeschaltet sind.

8. Schaltung nach Anspruch 7,
bei der im zweiten Signalpfad (2) dem Bandsperrfilter ein Duplexer (DU) nachgeschaltet ist.

9. Schaltung nach einem der Ansprüche 1 bis 8,
bei der der erste Signalpfad (1) ausgangsseitig für eine symmetrische Signalführung ausgelegt ist.

10. Schaltung nach einem der Ansprüche 1 bis 9,
bei der der Durchlaßbereich mit dem ihm zugeordneten Sperrbereich im wesentlichen übereinstimmt.

11. Schaltung nach einem der Ansprüche 1 bis 10,
bei der der Durchlaßbereich breiter als der ihm zugeordnete Sperrbereich ist.

12. Schaltung nach einem der Ansprüche 1 bis 11,
bei dem das Bandpaßfilter und das Bandsperrfilter in unterschiedlichen Technologien ausgeführt sind.

13. Schaltung nach einem der Ansprüche 1 bis 12,
bei dem das Bandpaßfilter und/oder das Bandsperrfilter zumindest einen mit akustischen Wellen arbeitenden Resonator oder Wandler aufweist.

14. Schaltung nach einem der Ansprüche 1 bis 13,
wobei die mindestens erste und zweite elektroakustische Struktur in SAW und/oder BAW Technik ausgeführt sind.

15. Bauelement mit einer Schaltung nach einem der Ansprüche 1 bis 14, umfassend einen Antenneneingang,
zumindest einen dem zweiten Signalpfad zugeordneten Ausgang, und zumindest einem dem ersten Signalpfad zugeordneten Ausgang.
